# EUROPÄISCHE PATENTSCHRIFT

(11) **EP 4 000 860 B1**
(45) Veröffentlichungstag und Bekanntmachung des Hinweises auf die Patenterteilung: **14.12.2022**
(21) Anmeldenummer: 21200896.5
(22) Anmeldetag: 05.10.2021
(51) Int. Cl.: B29C 48/00, B29C 48/09, B29C 48/10, B29C 48/16, B29C 48/275, B29C 48/335, B29C 49/02, B29C 49/04, B29B 17/00, C08J 11/04, B32B 27/08, B29B 17/04, B29K 23/00, B29K 67/00, B29K 77/00

(54) **VERFAHREN ZUR HERSTELLUNG VON BEHÄLTERN**
METHOD FOR THE PRODUCTION OF CONTAINERS
PROCÉDÉ DE FABRICATION DE RÉCIPIENTS

(30) Priorität: 13.11.2020 DE 102020129996
(43) Veröffentlichungstag der Anmeldung: 25.05.2022
(73) Patentinhaber: Gaplast GmbH, 82442 Altenau (DE)
(72) Erfinder: Kneer, Stephan, 82490 Farchant (DE); Bölz, Uwe, 82327 Tutzing (DE); Yilginc, Kasim, 82487 Oberammergau (DE)
(74) Vertreter: Flosdorff, Jürgen

(56) Entgegenhaltungen:
- EP-B1- 1 996 384
- US-A- 4 824 618
- US-B2- 8 404 755
- US-B2- 10 160 154

## Beschreibung

Die Erfindung betrifft ein Verfahren zur kontinuierlichen Herstellung von Behältern bestehend aus einem im wesentlichen steifen Außenbehälter und einem leicht verformbaren Innenbeutel aus keine Schweißverbindung miteinander eingehenden, ersten und zweiten thermoplastischen Kunststoffen, wobei einem ersten Schneckenförderer der erste thermoplastische Kunststoff für den Außenbehälter und einem zweiten Schneckenförderer der zweite thermoplastische Kunststoff für den Innenbeutel zugeführt werden, die mit einer Extruderdüse verbunden sind, die einen aus zwei Schläuchen bestehenden Vorformling koextrudiert, der zwischen den geöffneten Hälften einer Blasform angeordnet wird, wobei die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus verschweißtem Material des Außenbehälters ausgebildet wird, in dem die verschweißte Bodennaht des Innenbeutels eingeklemmt und in axialer Richtung gehalten ist, und wobei der Vorformling durch ein Druckmedium zur Anlage an die Wandung der Blasform aufgeblasen und aus der Blasform entnommen wird, wonach der Innenbeutel von der Wand des Außenbehälters abgelöst wird.

Ein derartiges Verfahren ist aus der EP 1 996 384 B1 bekannt, die sich damit befasst, wie der Innenbeutel des Behälters vollständig von der Wand des Außenbehälters abgelöst wird, was die Voraussetzung dafür ist, dass der Behälterinhalt später vollständig aus der Behälteröffnung abgegeben werden kann. Der Innenbeutel darf dabei an keiner Stelle eine Schweißverbindung mit dem Außenbehälter eingehen, da er sich sonst nicht vollständig ablösen lassen würde.

Bei dem bisherigen Verfahren wird das am Bodenbereich des herzustellendes Behälters abgequetschte Überschussmaterial, das aus verschweißtem Material des Außenbehälters und dazwischen eingeklemmtem Material des Innenbeutels besteht, verworfen oder für minderwertige Anwendungen an Dritte abgegeben. Da bei dem beschriebenen Verfahren eine beträchtliche Menge an Überschussmaterial anfällt, das aus dem Herstellungsprozess ausgesondert wird, trägt dies zu den verhältnismäßig großen Herstellungskosten der Behälter bei, zumal die Rohstoffpreise für die eingesetzten thermoplastischen Kunststoffe inzwischen stark gestiegen sind und weiter steigen werden.

Der vorliegenden Erfindung liegt die Aufgabe zugrunde, ein Verfahren zur Herstellung von Behältern, die aus einem steifen Außenbehälter und einem leicht verformbaren Innenbeutel bestehen, anzugeben, bei dem die Herstellungskosten verringert sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass das Überschussmaterial wieder dem ersten Schneckenförderer zugeführt wird, der das Überschussmaterial mit dem ersten thermoplastischen Kunststoff vermischt und der Extruderdüse zuführt, wobei der erste thermoplastische Kunststoff, bei dem es sich um Neuware handelt, im geschmolzenen Zustand eine geringere Viskosität als das wiederverwendete Überschussmaterial aufweist, so dass die Außenschicht des extrudierten Schlauchs ausschließlich aus dem ersten thermoplastischen Kunststoff besteht. Es hat sich überraschenderweise gezeigt, dass sich in dem extrudierten Schlauch des Außenbehälters aufgrund der unterschiedlichen Viskositäten eine Mittelschicht aus dem Überschussmaterial und beidseitige Außenschichten aus dem ersten thermoplastischen Kunststoff bilden, so dass kein Überschussmaterial an der Außenschicht des extrudierten Schlauchs frei liegt. Damit lässt sich nach Entnahme des aufgeblasenen Vorformlings aus der Blasform und Abkühlung des Vorformlings der Innenbeutel vollständig von der Wand des Außenbehälters ablösen, genauso wie dies der Fall ist, wenn für beide Kunststoffschichten nur Neuware eingesetzt worden wäre. Durch diese Wiederverwendung des abgequetschten Überschussmaterials lässt sich die Menge der eingesetzten Neuware des ersten thermoplastischen Kunststoffs signifikant verringern, wodurch die Herstellungskosten des Behälters deutlich sinken.

Die beiden thermoplastischen Kunststoffe werden vorzugsweise als Granulate den jeweiligen Schneckenförderern zugeführt.

Das Überschussmaterial kann unbehandelt wieder dem ersten Schneckenförderer zugeführt werden, so dass die Herstellung im On-Line-Verfahren erfolgt. Dabei kann das Überschussmaterial auch in einem zusätzlichen Verfahrensschritt zerkleinert werden, bevor es dem ersten Schneckenförderer zugeführt wird.

In einem alternativen Off-Line-Verfahren kann das Überschussmaterial gesammelt und zu Granulat verarbeitet werden, bevor es dem ersten Schneckenförderer zugeführt wird, der Bestandteil einer parallel arbeitenden Maschine sein kann.

Das erfindungsgemäße Verfahren ist überraschenderweise auch dann anwendbar, wenn ein hoher Anteil des Überschussmaterials eingesetzt wird. Dieser Anteil des Überschussmaterials an dem Gemisch mit dem ersten thermoplastischen Kunststoff kann bis zu 75 Gew.% betragen, wobei ein Anteil von 70 Gew.-% besonders bevorzugt ist. Auch bei diesen hohen Anteilen des Überschussmaterials an dem auszubildenden Außenbehälter ist das Überschussmaterial an den Außenseiten des extrudierten Schlauchs vollständig von der eingesetzten Neuware überdeckt, so dass es an keiner Stelle zu einer Verschweißung mit dem anliegenden Innenbeutel kommt.

Als Materialien werden für den Außenbehälter vorzugsweise PP, PET-G, PCTG, PA, HDPE verwendet, während der Innenbeutel vorzugsweise aus Lupolen oder Surlyn bestehen kann. Der Innenbeutel kann aber auch aus zwei oder drei Schichten bestehen, beispielsweise EVOH, Haftvermittlerschicht, lonomer oder LDPE. Die Erfindung ist auf die Verwendung der genannten Materialien nicht beschränkt.

Die Erfindung sieht vor, dass bei der Herstellung von Behältern, die einen Außenbehälter mit einer Wandstärke von nur 1 bis 1,5 mm haben können, dieser Außenbehälter größtenteils aus in einem vorangegangenen Herstellungszyklus abgequetschtem Überschussmaterial gebildet werden kann, wobei das Überschussmaterial von in weit geringerer Menge eingesetzter Neuware vollständig nach außen hin eingeschlossen ist, so dass das Überschussmaterial an keiner Stelle zur Außenseite des extrudierten Kunststoffschlauchs hin frei liegt.

## Patentansprüche

1. Verfahren zur Herstellung von Behältern bestehend aus einem steifen Außenbehälter und einem leicht verformbaren Innenbeutel aus keine Schweißverbindung miteinander eingehenden, ersten und zweiten thermoplastischen Kunststoffen, wobei einem ersten Schneckenförderer der erste thermoplastische Kunststoff für den Außenbehälter und einem zweiten Schneckenförderer der zweite thermoplastische Kunststoff für den Innenbeutel zugeführt werden, die mit einer Extruderdüse verbunden sind, die einen aus zwei Schläuchen bestehenden Vorformling coextrudiert, der zwischen den geöffneten Hälften einer Blasform angeordnet wird, wobei die Blasform geschlossen wird, wenn der Vorformling die zur Herstellung des Behälters erforderliche Länge hat, wobei Überschussmaterial im Bodenbereich des herzustellenden Behälters abgequetscht und ein Steg aus Material des Außenbehälters ausgebildet wird, in dem die verschweißte Bodennaht des Innenbeutels eingeklemmt und in axialer Richtung gehalten werden kann, und wobei der Vorformling durch ein Druckmedium zur Anlage an die Wandung der Blasform aufgeblasen und aus der Blasform entnommen wird, und wonach der Innenbeutel von der Wand des Außenbehälters abgelöst wird,
**dadurch gekennzeichnet,**
**dass** das Überschussmaterial wieder dem ersten Schneckenförderer zugeführt wird, der das Überschussmaterial mit dem ersten thermoplastischen Kunststoff vermischt und der Extruderdüse zuführt, wobei der erste thermoplastische Kunststoff im geschmolzenen Zustand eine geringere Viskosität als das Überschussmaterial aufweist, so dass sich in dem extrudierten Schlauch des Außenbehälters aufgrund der unterschiedlichen Viskositäten eine Mittelschicht aus dem Überschussmaterial und beidseitige Außenschichten aus dem ersten thermoplastischen Kunststoff bilden, so dass kein Überschussmaterial an der Außenschicht des extrudierten Schlauchs frei liegt.

2. Verfahren nach Anspruch 1,
**dadurch gekennzeichnet,**
**dass** beide thermoplastischen Kunststoffe als Granulate den Schneckenförderern zugeführt werden.

3. Verfahren nach einem der Ansprüche 1 oder 2,
**dadurch gekennzeichnet,**
**dass** das Überschussmaterial unbehandelt wieder dem ersten Schneckenförderer zugeführt wird.

4. Verfahren nach einem der Ansprüche 1 oder 2,
**dadurch gekennzeichnet,**
**dass** das Überschussmaterial zerkleinert wird, bevor es dem ersten Schneckenförderer zugeführt wird.

5. Verfahren nach einem der Ansprüche 1 oder 2,
**dadurch gekennzeichnet,**
**dass** das Überschussmaterial zu Granulat verarbeitet wird, bevor es dem ersten Schneckenförderer zugeführt wird.

6. Verfahren nach einem der Ansprüche 1 bis 5,
**dadurch gekennzeichnet,**
**dass** der Anteil des Überschussmaterials an dem Gemisch ≤ 75 Gew.%, vorzugsweise ≤ 70 Gew.% beträgt.

7. Verfahren nach einem der Ansprüche 1 bis 6,
**dadurch gekennzeichnet,**
**dass** als Material für den ersten thermoplastischen Kunststoff PP, PET-G, PCTG, PA, HDPE verwendet wird.

8. Verfahren nach einem der Ansprüche 1 bis 7,
**dadurch gekennzeichnet,**
**dass** als Material für den zweiten thermoplastischen Kunststoff Lupolen oder Surlyn verwendet wird.

## Claims

1. A method of manufacturing containers consisting of a stiff outer container and a readily deformable inner bag consisting of first and second thermoplastic plastic materials which do not form a weld connection with one another, wherein the first thermoplastic plastic material for the outer container is supplied to a first screw conveyor and the second thermoplastic plastic for the inner bag is supplied to a second screw conveyor, which screw conveyors are connected to an extruder nozzle, which co-extrudes a preform consisting of two tubes, which is arranged between the open halves of a blow mould, wherein the blow mould is closed when the preform has the length necessary for the manufacture of the container, wherein excess material in the base region of the container to be manufactured is squeezed and a web is formed from the material of the outer container, in which the welded base seam of the inner bag is clamped and is held in the axial direction and wherein the preform is inflated by a pressure medium into engagement with the wall of the blow mould and is removed from the blow mould and whereafter the inner bag is detached from the wall of the outer container, **characterised in that** the excess material is again supplied to the first screw conveyor which mixes the excess material with the first thermoplastic plastic material and supplies it to the extruder nozzle, wherein the first thermoplastic plastic material has a lower viscosity in the molten state than the excess material so that a middle layer consisting of the excess material and outer layers on both sides of it consisting of the first thermoplastic plastic material form in the extruded tube of the outer container due to the different viscosities so that no excess material is exposed on the outer layer of the extruded tube.

2. A method as claimed in Claim 1, **characterised in that** the two thermoplastic plastic materials are supplied to the screw conveyors in the form of granulates.

3. A method as claimed in one of Claims 1 or 2, **characterised in that** the excess material is supplied again untreated to the first screw conveyor.

4. A method as claimed in one of Claims 1 or 2, **characterised in that** the excess material is comminuted before it is supplied to the first screw conveyor.

5. A method as claimed in one of Claims 1 or 2, **characterised in that** the excess material is processed to form a granulate before it is supplied to the first screw conveyor.

6. A method as claimed in one of Claims 1 to 5, **characterised in that** the proportion of the excess material in the mixture is ≤ 75 wt.%, preferably ≤ 70 wt.%.

7. A method as claimed in one of Claims 1 to 6, **characterised in that** PP, PET-G, PCTG, PA or HDPE is used as the material for the first thermoplastic plastic material.

8. A method as claimed in one of Claims 1 to 7, **characterised in that** Lupolen or Surlyn is used as the material for the second thermoplastic plastic material.

## Revendications

1. Procédé de fabrication de récipients se composant d'un récipient extérieur rigide et d'un sachet intérieur légèrement déformable à partir de première et deuxième matières thermoplastiques n'établissant aucune liaison soudée entre elles, dans lequel la première matière thermoplastique pour le récipient extérieur est fournie à un premier transporteur à vis et la deuxième matière thermoplastique pour le sachet intérieur est fournie à un deuxième transporteur à vis, lesquels sont reliés à une filière d'extrudeuse, qui co-extrude une pré-ébauche se composant de deux tuyaux flexibles qui est agencée entre les moitiés ouvertes d'un moule de soufflage, dans lequel le moule de soufflage est fermé lorsque la pré-ébauche possède la longueur nécessaire à la fabrication du récipient, dans lequel de la matière excédentaire est écrasée dans la zone de fond du récipient à fabriquer et une nervure est réalisée à partir de la matière du récipient extérieur, dans lequel la couture de fond soudée du sachet intérieur peut être serrée et maintenue dans le sens axial, et dans lequel la pré-ébauche est soufflée par un milieu de pression pour l'installation contre la paroi du moule de soufflage et est retirée du moule de soufflage, et à la suite de quoi le sachet intérieur est détaché de la paroi du récipient extérieur,
**caractérisé en ce**
**que** la matière excédentaire est de nouveau fournie au premier transporteur à vis qui mélange la matière excédentaire avec la première matière thermoplastique et la fournit à la filière d'extrudeuse,
dans lequel la première matière thermoplastique présente à l'état fondu une viscosité plus faible que celle de la matière excédentaire de sorte que dans le tuyau flexible extrudé du récipient extérieur, une couche médiane en la matière excédentaire et des couches extérieures bilatérales en la première matière thermoplastique se forment en raison de différentes viscosités de sorte qu'aucune matière excédentaire ne soit exposée sur la couche extérieure du tuyau flexible extrudé.

2. Procédé selon la revendication 1,
**caractérisé en ce**
**que** les deux matières thermoplastiques sont fournies comme granulats aux transporteurs à vis.

3. Procédé selon l'une quelconque des revendications 1 ou 2,
**caractérisé en ce**
**que** la matière excédentaire est de nouveau fournie sans traitement au premier transporteur à vis.

4. Procédé selon l'une quelconque des revendications 1 ou 2,
**caractérisé en ce**
**que** la matière excédentaire est broyée avant qu'elle ne soit fournie au premier transporteur à vis.

5. Procédé selon l'une quelconque des revendications 1 ou 2,
**caractérisé en ce**
**que** la matière excédentaire est traitée pour former un granulat avant qu'elle ne soit fournie au premier transporteur à vis.

6. Procédé selon l'une quelconque des revendications 1 à. 5,
**caractérisé en ce**
**que** la part de matière excédentaire dans le mélange s'élève à ≤ 75 % en poids, de préférence à ≤ 70 % en poids.

7. Procédé selon l'une quelconque des revendications 1 à 6,
**caractérisé en ce**
**que** du PP, PET-G, PCTG, PA, HDPE est utilisé comme matière pour la première matière thermoplastique.

8. Procédé selon l'une quelconque des revendications 1 à 7,
**caractérisé en ce**
**que** du Lupolen ou du Surlyn est utilisé comme matière pour la deuxième matière thermoplastique.
